(19) Europäisches Patentamt
European Patent Office
Office européen des brevets

(11) **EP 4 588 561 A1**

(12) **EUROPEAN PATENT APPLICATION**
published in accordance with Art. 153(4) EPC

(43) Date of publication:
**23.07.2025 Bulletin 2025/30**

(21) Application number: **23865609.4**

(22) Date of filing: **15.09.2023**

(51) International Patent Classification (IPC):
*B01J 27/051* $^{(2006.01)}$     *B01J 37/20* $^{(2006.01)}$
*C01G 39/02* $^{(2006.01)}$     *C01G 39/06* $^{(2006.01)}$
*C25B 1/04* $^{(2021.01)}$     *C25B 11/091* $^{(2021.01)}$

(52) Cooperative Patent Classification (CPC):
B01J 27/051; B01J 37/20; C01G 39/02;
C01G 39/06; C25B 1/04; C25B 11/091; Y02E 60/36

(86) International application number:
**PCT/JP2023/033665**

(87) International publication number:
**WO 2024/058260 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.09.2022 JP 2022146943**

(71) Applicant: **DIC Corporation**
**Tokyo 174-8520 (JP)**

(72) Inventors:
• **YUAN, Guohao**
  **Sakura-shi, Chiba 285-8668 (JP)**

• **OMICHI, Koji**
  **Sakura-shi, Chiba 285-8668 (JP)**
• **YOSHIMURA, Takumi**
  **Sakura-shi, Chiba 285-8668 (JP)**
• **TANGE, Mutsuko**
  **Sakura-shi, Chiba 285-8668 (JP)**
• **UOTA, Masafumi**
  **Sakura-shi, Chiba 285-8668 (JP)**
• **YUAN, Jianjun**
  **Sakura-shi, Chiba 285-8668 (JP)**

(74) Representative: **Kraus & Lederer PartGmbB**
**Thomas-Wimmer-Ring 15**
**80539 München (DE)**

(54) **COMPOSITE BODY, CATALYTIC INK, AND METHOD FOR MANUFACTURING COMPOSITE BODY**

(57)     Provided is a composite including molybdenum disulfide and molybdenum trioxide, in which the molybdenum disulfide includes a 3R crystal structure, and the percentage content of a molybdenum trioxide-equivalent value (B) calculated from the molybdenum content determined by XRF analysis of the composite relative to the total mass of the composite is 5 to 90 mass%. Also provided is a catalytic ink including the composite and a solvent. Also provided is a method for producing the composite, including a calcination step of heating molybdenum trioxide in the presence of a sulfur source at a temperature of 400°C or less.

[FIG. 2]

**Description**

TECHNICAL FIELD

The present invention relates to a composite, a catalytic ink, and a method for producing a composite.
This application claims priority to Japanese Patent Application No. 2022-146943 filed in Japan on September 15, 2022, the contents of which are incorporated herein by reference.

BACKGROUND ART

In an effort to solve environmental problems and energy resource problems, water electrolysis technology has been attracting attention as a technology that can produce hydrogen from water using electricity from renewable energies.
Layered transition metal chalcogen compounds, such as molybdenum disulfide ($MoS_2$), are expected to serve as materials that are inexpensive and abundant in resources and at the same time have high catalytic activity.
Such catalytic activity can be enhanced to a certain extent by micronizing or deagglomerating a molybdenum sulfide obtained by any production method, such as the sulfurization of a molybdenum oxide. However, this alone often fails to provide the expected performance. Thus, for the exhibition of better performance suited to each intended use, methods for producing molybdenum sulfides with unique shapes, such as a monolayer shape, a nanoflower shape, and a fullerene-like shape, have been examined (see PLTs 1 and 2).

CITATION LIST

PATENT LITERATURE

PTL 1: JP2004-277199A

PTL 2: JP2004-512250A

SUMMARY OF INVENTION

TECHNICAL PROBLEM

However, with respect to the provision of a novel catalyst material containing molybdenum disulfide, there is still room for examination.
An object of the invention is to provide a composite that can be used as a catalyst, particularly as a hydrogen evolution catalyst, as well as a catalytic ink and a method for producing a composite.

SOLUTION TO PROBLEM

The invention has the following modes.
<1> A composite including molybdenum disulfide and molybdenum trioxide, in which

the molybdenum disulfide includes a 3R crystal structure, and
the percentage content of a molybdenum trioxide-equivalent value (B) calculated from the molybdenum content determined by XRF analysis of the composite relative to the total mass of the composite is 5 to 90 mass%.

<2> The composite according to the above <1>, in which the molybdenum disulfide has an average crystallite size of 50 nm or less as determined from a peak at $2\theta = 14.4° \pm 0.5°$ obtained by X-ray diffraction measurement.
<3> The composite according to the above <1> or <2>, in which the molybdenum trioxide has an average crystallite size of 50 nm or less as determined from a peak at $2\theta = 12.7° \pm 0.5$ obtained by X-ray diffraction measurement.
<4> The composite according to any one of the above <1> to <3>, in which the composite has a median diameter $D_{50}$ of 1,000 nm or less as determined by a dynamic light scattering method.
<5> The composite according to any one of the above <1> to <4>, in which the composite has a specific surface area of 5 $m^2/g$ or more and 200 $m^2/g$ or less as measured by the BET method.

<6> The composite according to any one of the above <1> to <5>, in which the ratio (A/B) of a molybdenum disulfide-equivalent value (A) calculated from the sulfur content determined by XRF analysis of the composite relative to the molybdenum trioxide-equivalent value (B) calculated from the molybdenum content determined by XRF analysis of the composite is 0.1 to 50 on a mass basis.

<7> The composite according to any one of the above <1> to <6>, in which the percentage content of a molybdenum disulfide-equivalent value (A) calculated from the sulfur content determined by XRF analysis of the composite relative to the total mass of the composite is 10 to 95 mass%.

<8> The composite according to any one of the above <1> to <7>, in which the proportion of the content of sulfur as a simple substance relative to the total content of elemental sulfur in the composite is 10% or less on a molar basis.

<9> The composite according to any one of the above <1> to <8>, being for use as a hydrogen evolution catalyst.

<10> A catalytic ink including the composite according to any one of the above <1> to <9> and a solvent.

<11> A method for producing a composite, being for producing the composite according to any one of the above <1> to <9> and including a calcination step of heating molybdenum trioxide in the presence of a sulfur source at a temperature of 400°C or less.

<12> The method for producing a composite according to the above <11>, including, after the calcination step, a washing step for removing the sulfur source.

<13> The method for producing a composite according to the above <11> or <12>, in which the molybdenum trioxide has a specific surface area of 10 m$^2$/g or more and 100 m$^2$/g or less as measured by the BET method.

ADVANTAGEOUS EFFECTS OF INVENTION

According to the invention, a composite that can be used as a catalyst, particularly as a hydrogen evolution catalyst, as well as a catalytic ink and a method for producing a composite, can be provided.

BRIEF DESCRIPTION OF DRAWINGS

FIG. 1 is a schematic diagram showing an example of an apparatus used for producing molybdenum trioxide particles that can be used as a raw material for a composite of an embodiment.
FIG. 2 is a diagram showing X-ray diffraction (XRD) profiles of the particles obtained in Examples 1 to 5 and Reference Example 1 overlaid on one another.
FIG. 3 is a transmission electron microscope (TEM) image of the composite particles obtained in Example 1.
FIG. 4 is a diagram showing a high-angle annular dark field scanning TEM (HAADF-STEM) image of the composite particles obtained in Example 1 and also the results of element mapping by energy-dispersive X-ray spectroscopy (EDS).

DESCRIPTION OF EMBODIMENTS

Hereinafter, embodiments of the composite, catalytic ink, and method for producing a composite of the invention will be described.

<<Composite>>

A composite of an embodiment is a composite containing molybdenum disulfide and molybdenum trioxide, in which the molybdenum disulfide includes a 3R crystal structure, and the percentage content of a molybdenum trioxide-equivalent value (B) calculated from the molybdenum content determined by XRF analysis of the composite relative to the total mass of the composite is 5 to 90 mass%.

The composite of the embodiment contains both molybdenum disulfide (MoS$_2$) and molybdenum trioxide (MoO$_3$).

When the composite contains MoS$_2$ and MoO$_3$, the catalytic performance is improved due to the exchange of electrons at the interface between MoS$_2$ and MoO$_3$.

In addition, the presence of a 3R crystal structure in molybdenum disulfide in the composite of the embodiment contributes to the improvement of catalytic performance. The crystal structure of molybdenum disulfide will be described in detail later.

As shown in the examples described later, composite particles containing molybdenum disulfide and molybdenum trioxide have improved catalytic performance as a hydrogen evolution catalyst compared to particles containing only molybdenum disulfide, particles containing only molybdenum trioxide, or particles containing both of them but not satisfying the value of the molybdenum trioxide-equivalent value (B) described above.

The existence forms of $MoS_2$ and $MoO_3$ in the composite of the embodiment are not particularly limited. However, according to the results of analysis by energy-dispersive X-ray spectroscopy (EDS) shown in the examples described later, it has been found that in a region closer to the surface of composite particles, the content of elemental S is higher than that of elemental O.

From this, in the composite of the embodiment, $MoS_2$ may be localized in the surface of the composite. When $MoS_2$ is localized in the surface of the composite, this refers to the state in which $MoS_2$ is distributed in a larger amount in the surface of the composite than inside the composite. In addition, the state also may be such that $MoO_3$ is distributed in a smaller amount in the surface of the composite than inside the composite.

The composite of the embodiment contains molybdenum disulfide ($MoS_2$). The composite of the embodiment contains molybdenum disulfide ($MoS_2$) preferably in an amount of 10 to 95 mass%, more preferably in an amount of 15 to 50 mass%, and still more preferably in an amount of 20 to 45 mass%, relative to the total mass (100 mass%) of the composite.

The content of molybdenum disulfide ($MoS_2$) in the composite of the embodiment may be a value calculated by the following XRF analysis.

In the composite of the embodiment, the percentage content of a molybdenum disulfide-equivalent value (A) calculated from the sulfur content determined by XRF analysis of the composite relative to the total mass of the composite is preferably 10 to 95 mass%, more preferably 15 to 50 mass%, and still more preferably 20 to 45 mass%.

A composite in which the percentage content of the molybdenum disulfide-equivalent value (A) is within the above range has good proportions of molybdenum sulfides contained, and the molybdenum sulfide-derived catalytic activity is exhibited even more effectively.

A molybdenum disulfide-equivalent value (A) refers to a value determined from the $MoS_2$ amount calculated using a calibration curve in terms of $MoS_2$ from the sulfur content determined by XRF analysis of the composite.

The composite of the embodiment contains molybdenum trioxide ($MoO_3$). The composite of the embodiment may contain molybdenum trioxide ($MoO_3$) in amount of 5 to 90 mass%, more preferably 50 to 85 mass%, and still more preferably 55 to 80 mass%, relative to the total mass (100 mass%) of the composite.

The content of molybdenum trioxide ($MoO_3$) in the composite of the embodiment may be a value calculated by the following XRF analysis.

In the composite of the embodiment, the percentage content of a molybdenum trioxide-equivalent value (B) calculated from the molybdenum content determined by XRF analysis of the composite relative to the total mass of the composite is 5 to 90 mass%, preferably 50 to 85 mass%, and more preferably 55 to 80 mass%.

A composite in which the percentage content of the molybdenum trioxide-equivalent value (B) is within the above range has good proportions of molybdenum oxides contained, and the molybdenum oxide-derived catalytic activity is exhibited even more effectively.

A molybdenum trioxide-equivalent value (B) refers to a value determined from the $MoO_3$ amount calculated using a calibration curve in terms of $MoO_3$ from the molybdenum content determined by XRF analysis of the composite.

Incidentally, in the composite of the embodiment, molybdenum is contained also in the form of $MoS_2$. Therefore, the $MoS_2$-equivalent value is first determined as described above, and the molybdenum amount minus the $MoS_2$-equivalent value of molybdenum is used to calculate the molybdenum trioxide-equivalent value (B).

In the composite of the embodiment, preferably, the percentage content of the molybdenum disulfide-equivalent value (A) relative to the total mass of the composite may be 10 to 95 mass%, and the percentage content of the molybdenum trioxide-equivalent value (B) relative to the total mass of the composite may be 5 to 90 mass%.

In the composite of the embodiment, more preferably, the percentage content of the molybdenum disulfide-equivalent value (A) relative to the total mass of the composite may be 15 to 50 mass%, and the percentage content of the molybdenum trioxide-equivalent value (B) relative to the total mass of the composite may be 50 to 85 mass%.

In the composite of the embodiment, still more preferably, the percentage content of the molybdenum disulfide-equivalent value (A) relative to the total mass of the composite may be 20 to 45 mass%, and the percentage content of the molybdenum trioxide-equivalent value (B) relative to the total mass of the composite may be 55 to 80 mass%.

The ratio (A/B) of the molybdenum disulfide-equivalent value (A) calculated from the sulfur content determined by XRF analysis of the composite relative to the molybdenum trioxide-equivalent value (B) calculated from the molybdenum content determined by XRF analysis of the composite is, on a mass basis, preferably 0.1 or more, more preferably 0.2 or more, still more preferably 0.25 or more, and particularly preferably 0.3 or more. In addition, the ratio (A/B) is preferably 50 or less, more preferably 25 or less, still more preferably 3 or less, and particularly preferably less than 1.

The numerical value range of the numerical values of the ratio (A/B) may be, for example, 0.1 or more and 50 or less, 0.2 or more and 25 or less, 0.25 or more and 3 or less, or 0.3 or more and less than 1.

A composite in which the ratio (A/B) is within the above range has a well-balanced content ratio between molybdenum oxides and molybdenum sulfides, has a favorable abundance of interfaces that contribute to the catalytic activity, and thus can exhibit the catalytic activity even more effectively.

The average crystallite size of the molybdenum disulfide contained in the composite determined from the peak at $2\theta = 14.4°\pm0.5°$ obtained by X-ray diffraction measurement is preferably 50 nm or less, preferably 40 nm or less, more preferably 30 nm or less, still more preferably 20 nm or less, especially preferably 10 nm or less, and particularly preferably less than 6 nm.

The peak at $2\theta = 14.4°\pm0.5°$ is attributed to the (002) or (003) plane of molybdenum disulfide ($MoS_2$). The presence of $MoS_2$ having a small average crystallite size of equal to or less than the above upper limit, for example, leads to an increased number of catalytically active sites that contribute to the catalytic activity, such as interfaces and defects, and the catalytic performance is improved.

The lower limit of the average crystallite size of the molybdenum disulfide determined from the peak at $2\theta = 14.4°\pm0.5°$ obtained by X-ray diffraction measurement may be, for example, 1 nm or more, 2 nm or more, or 3 nm or more.

The numerical value range of the numerical values of the average crystallite size of the molybdenum disulfide determined from the peak at $2\theta = 14.4°\pm0.5°$ obtained by X-ray diffraction measurement may be, for example, 1 nm or more and 50 nm or less, 2 nm or more and 40 nm or less, 2 nm or more and 30 nm or less, 3 nm or more and 20 nm or less, 3 nm or more and 10 nm or less, or 3 nm or more and less than 6 nm.

The average crystallite size of the molybdenum trioxide contained in the composite determined from the peak at $2\theta = 12.7°\pm0.5$ obtained by X-ray diffraction measurement is preferably 50 nm or less, more preferably 40 nm or less, still more preferably 30 nm or less, and particularly preferably 20 nm or less.

The peak at $2\theta = 12.7°\pm0.5°$ is attributed to the (020) plane of molybdenum trioxide ($MoO_3$). The presence of $MoO_3$ having a small average crystallite size of equal to or less than the above upper limit, for example, leads to an increased number of catalytically active sites that contribute to the catalytic activity, such as interfaces and defects, and the catalytic performance is improved.

The lower limit of the average crystallite size of the molybdenum trioxide determined from the peak at $2\theta = 2.7°\pm0.5°$ obtained by X-ray diffraction measurement may be, for example, 1 nm or more, 2 nm or more, or 3 nm or more.

The numerical value range of the numerical values of the average crystallite size of the molybdenum trioxide determined from the peak at $2\theta = 12.7°\pm0.5$ obtained by X-ray diffraction measurement may be, for example, 1 nm or more and 50 nm or less, 2 nm or more and 40 nm or less, 3 nm or more and 30 nm or less, or 3 nm or more and 20 nm or less.

The average crystallite size in the composite of the embodiment can be specified by the following measurement method.

[Measurement of Crystallite Size]

Measurement is performed using an X-ray diffraction apparatus (e.g., SmartLab 9 kW manufactured by Rigaku Corporation), a scintillation counter as a detector, and analysis software (e.g., PDXL2). The measurement method is the $2\theta/\theta$ method, and the average crystallite size is calculated from the half-width of the peak appearing in the corresponding range $2\theta = 14.4°\pm0.5°$ or $2\theta = 12.7°\pm0.5°$ using the Scherrer equation. The measurement conditions are as follows: scanning speed ($2\theta$): 2.0°/min, scanning range ($2\theta$): 10 to 70°, step ($2\theta$): 0.02°, apparatus standard width: none.

The composite of the embodiment may be a particulate structure (composite particles).

The median diameter $D_{50}$ of the composite of the embodiment determined by a dynamic light scattering method is preferably 1,000 nm or less, more preferably 800 nm or less, and still more preferably 600 nm or less.

A composite in which the median diameter $D_{50}$ is equal to or less than the above upper limit can exhibit the catalytic efficiency more effectively.

The median diameter $D_{50}$ of the composite of the embodiment determined by a dynamic light scattering method may be, for example, 20 nm or more, 40 nm or more, 100 nm or more, or 300 nm or more.

The numerical value range of the numerical values of the median diameter $D_{50}$ of the composite of the embodiment determined by a dynamic light scattering method may be, for example, 20 nm or more and 1,000 nm or less, 40 nm or more and 800 nm or less, 100 nm or more and 600 nm or less, or 300 nm or more and 600 nm or less.

The median diameter $D_{50}$ of the composite of the embodiment calculated by a dynamic light scattering method can be determined as the particle diameter at a volume cumulative percentage of 50% in a particle size distribution measured wet with acetone as the medium using a dynamic light scattering particle size distribution measuring apparatus (e.g., Nanotrac WaveII manufactured by MicrotracBEL Corp.).

The specific surface area of the composite of the embodiment measured by the BET method is preferably 5 $m^2/g$ or more, more preferably 10 $m^2/g$ or more, still more preferably 15 $m^2/g$ or more, and particularly preferably 20 $m^2/g$ or more.

A composite in which the specific surface area is equal to or more than the above lower limit has a large specific surface area, which leads to an increased number of catalytically active sites and easier transfer of material in the reaction system, and the catalytic efficiency can be improved even more effectively.

The specific surface area of the composite of the embodiment measured by the BET method may be, for example, 200 $m^2/g$ or less, or 100 $m^2/g$ or less.

The numerical value range of the numerical values of the specific surface area of the composite of the embodiment measured by the BET method may be, for example, 5 $m^2/g$ or more and 200 $m^2/g$ or less, 10 $m^2/g$ or more and 200 $m^2/g$ or less, 15 $m^2/g$ or more and 100 $m^2/g$ or less, or 20 $m^2/g$ or more and 100 $m^2/g$ or less.

As used herein, the specific surface area is measured using a specific surface area meter (e.g., BELSORP-mini manufactured by MicrotracBEL Corp.), and the surface area per gram of sample measured from the amount of nitrogen gas adsorption using the BET method (Brunauer-Emmett-Teller method) is calculated as the specific surface area ($m^2/g$).

The proportion of the content of sulfur as a simple substance relative to the total content (100%) of elemental sulfur in the composite is, on a molar basis, preferably 10% or less, and more preferably 5% or less.

Incidentally, the composite of the embodiment can be provided in the form of a collection of composite particles (e.g., a powder). As long as the collection contains molybdenum disulfide ($MoS_2$), one or more molybdenum sulfides represented by $MoS_x$ (X = 1 to 3) may also be contained. Similarly, as long as the collection contains molybdenum trioxide ($MoO_3$), one or more molybdenum oxides represented by $MoO_2$ and $Mo_9O_{25}$, for example, may also be contained.

In addition, for example, as values concerning the average crystallite size, $D_{50}$, specific surface area, and XRF analysis described above, the conversion rate $R_C$ described below, and the like, values measured using a collection of composite particles (e.g., a powder) as a sample can be employed.

The conversion rate $R_C$ of the composite of the embodiment into $MoS_2$ is preferably 90% or less, more preferably 60% or less, and still more preferably 50% or less.

When the conversion rate $R_C$ into $MoS_2$ is equal to or less than the above upper limit, the catalytic performance can be exhibited more effectively.

The conversion rate $R_C$ of the composite of the embodiment into $MoS_2$ is preferably 10% or more, more preferably 15% or more, and still more preferably 20% or more.

When the conversion rate $R_C$ into $MoS_2$ is equal to or more than the above lower limit, the catalytic performance can be exhibited more effectively.

As an example of the numerical value range of the conversion rate $R_C$ of the composite of the embodiment, the conversion rate $R_C$ may be 10% or more and 90% or less, 15% or more and 60% or less, or 20% or more and 50% or less.

The conversion rate $R_C$ of the composite of the embodiment into $MoS_2$ can be determined by the RIR (reference intensity ratio) method from the profile data obtained by subjecting the composite of the embodiment to X-ray diffraction (XRD) measurement. The conversion rate $R_C$ into $MoS_2$ can be determined from the following formula (1) using the RIR value $K_A$ of molybdenum disulfide ($MoS_2$) and the integrated intensity $I_A$ of the peak at around $2\theta = 14.4° \pm 0.5°$ attributed to the (002) or (003) plane of molybdenum disulfide ($MoS_2$), as well as the RIR value $K_B$ of each molybdenum oxide (the raw material $MoO_3$, the reaction intermediates $Mo_9O_{25}$, $Mo_4O_{11}$, and $MoO_2$, etc.) and the integrated intensity $I_B$ of the strongest line peak of each molybdenum oxide (the raw material $MoO_3$, the reaction intermediates $Mo_9O_{25}$, $Mo_4O_{11}$, and $MoO_2$, etc.).

$$R_C\ (\%) = (I_A/K_A)/((I_A/K_A) + \Sigma(I_B/K_B)) \times 100 \ \dots \ (1)$$

Here, as the RIR values, values described in the Inorganic Crystal Structure Database (ICSD) (by Japan Association for International Chemical Information) can each be used, and, for the analysis, integrated powder X-ray analysis software (e.g., PDXL2 manufactured by Rigaku Corporation) can be used.

The crystal structure of the molybdenum trioxide contained in the composite of the embodiment may contain $\alpha$-crystals, and may also contain $\alpha$-crystals and $\beta$-crystals.

In the composite of the embodiment, the $\alpha$-crystal structure of molybdenum trioxide can be confirmed by the presence of a peak on the (021) plane of the $\alpha$-crystal of $MoO_3$ ($2\theta$: around 27.32°_No. 166363 (Inorganic Crystal Structure Database, ICSD)). In addition, the $\beta$-crystal structure can be confirmed by the presence of a peak attributed to the (011) plane of the $\beta$-crystal of $MoO_3$ ($2\theta$: around 23.01°, No. 86426 (Inorganic Crystal Structure Database, ICSD)) in a profile obtained from powder X-ray diffraction (XRD) using Cu-K$\alpha$ radiation as the X-ray source.

In the profile of the composite of the embodiment obtained from powder X-ray diffraction (XRD) using Cu-K$\alpha$ radiation as the X-ray source, it is preferable that the ratio ($\beta(011)/\alpha(021)$) of the peak intensity attributed to the (011) plane of the $\beta$-crystal of $MoO_3$ to the peak intensity attributed to the (021) plane of the $\alpha$-crystal of $MoO_3$ is 0.1 or more.

The peak intensity attributed to the (011) plane of the $\beta$-crystal of $MoO_3$ and the peak intensity attributed to the (021) plane of the $\alpha$-crystal of $MoO_3$ are obtained by reading the maximum intensity of each peak, and the ratio ($\beta(011)/\alpha(021)$) is determined.

In $MoO_3$ in the composite of the embodiment, the ratio ($\beta(011)/\alpha(021)$) is preferably 0.1 to 10.0, more preferably 0.2 to 10.0, and particularly preferably 0.4 to 10.0.

The percentage content of $\alpha$-crystals in $MoO_3$ in the composite of the embodiment is not particularly limited, but may be 20% or more, 50% or more, 70% or more, 80% or more, or 100%.

In a mixture of $\alpha$- and $\beta$-crystals of $MoO_3$, the percentage content of $\alpha$-crystals in $MoO_3$ can be determined from the obtained profile data by the RIR (reference intensity ratio) method. The percentage content (%) of $\alpha$-crystals in $MoO_3$ can be determined from the following formula (2) using the RIR value $K_A$ of the $\alpha$-crystal of $MoO_3$ and the integrated intensity $I_A$ of the (021) plane of the $\alpha$-crystal of $MoO_3$ (2$\theta$: around 27.32°_No. 166363 (Inorganic Crystal Structure Database, ICSD)), as well as the RIR value $K_B$ of the $\beta$-crystal of $MoO_3$ and the integrated intensity $I_B$ attributed to the (011) plane of the $\beta$-crystal of $MoO_3$ (2$\theta$: around 23.01°, No. 86426 (Inorganic Crystal Structure Database, ICSD)).

$$\text{Percentage content (\%) of } \alpha\text{-crystals in } MoO_3 = (I_A/K_A)/((I_A/K_A) + (I_B/K_B)) \times 100 \ ... \ (2)$$

...

Here, as the RIR values, values described in the ICSD database can each be used, and, for the analysis, integrated powder X-ray analysis software (PDXL2 manufactured by Rigaku Corporation) can be used.

The molybdenum disulfide contained in the composite of the embodiment includes a 3R crystal structure, and may also include a 2H crystal structure and a 3R crystal structure.

Such a composite of the embodiment including a 2H crystal structure and a 3R crystal structure is proprietary of the present applicant, and has not only a 2H crystal structure but also a rare 3R (rhombohedral) structure. A 3R structure tends to have a distorted crystal structure and thus has more catalytically active sites. Accordingly, the presence of a 3R crystal structure in molybdenum disulfide contributes to the improvement of catalytic performance.

The composite including a 3R crystal structure can be produced, for example, by the <<Method for Producing Composite>> described later, and it is possible to synthesize molybdenum disulfide that includes a 3R structure and is advantageous for achieving an increased surface area on nm scale, which is difficult to achieve by crushing mineral products or by synthesis from general-purpose molybdenum trioxide.

The abundance ratio of the 3R crystal structure in the crystal phase of molybdenum disulfide may be 5% or more and 60% or less, 10% or more and 60% or less, 20% or more and 60% or less, or 20% or more and 45% or less.

Whether molybdenum disulfide has a 2H crystal structure and a 3R crystal structure can be confirmed, for example, using extended Rietveld analysis software (High Score Plus manufactured by Malvern Panalytical) that can take into account the crystallite size. In this Rietveld analysis software, the entire XRD diffraction profile is simulated using a crystal structure model including the crystallite size, and compared with the XRD diffraction profile obtained experimentally. In such a manner to minimize the residual between the diffraction profile obtained experimentally and the diffraction profile obtained by calculation, crystal structure factors such as the crystal lattice constant, the atomic coordinate and like, the weight fraction (abundance ratio), and the like of the crystal structure model are optimized by the least squares method, and each phase of the 2H crystal structure and the 3R crystal structure is identified and quantified with high accuracy. As a result, in addition to the crystal structure types and their proportions calculated by normal Rietveld analysis, the crystallite size can be calculated. Hereinafter, as used therein, the above analytical technique using High Score Plus will be referred to as "extended Rietveld analysis".

In addition, in the composite of the embodiment, the crystallite size of the 3R crystal structure obtained by the extended Rietveld analysis using the profile obtained from XRD may be 1 nm or more and 50 nm or less. Its crystalline phase is preferably made up of crystallites having a size of 5 nm or more and 50 nm or less, and the crystallite size is more preferably 10 nm or more and 40 nm or less.

In addition, in the composite of the embodiment, the crystallite size of the 2H crystal structure obtained by the extended Rietveld analysis using the profile obtained from XRD is preferably 1 nm or more and 50 nm or less. The crystalline phase is preferably made up of crystallites having a size of 1 nm or more and 50 nm or less, and the crystallite size is more preferably 5 nm or more and 50 nm or less.

The 2H crystal structure obtained by the extended Rietveld analysis is preferably composed of one crystal phase made up of crystallites having a predetermined crystallite size. In this case, the crystallite size of the 2H crystal structure is more preferably 1 nm or more and 20 nm or less, and preferably 5 nm or more and 15 nm or less.

The crystallite size of the 2H crystal structure and the crystallite size of the 3R crystal structure can each also be calculated using the peak half-width in the XRD diffraction profile, for example.

The abundance ratio between the 2H crystal structure and the 3R crystal structure in the crystal phase (2H:3R) obtained by the extended Rietveld analysis using the profile obtained from XRD is preferably 10:90 to 90:10.

The abundance ratio between the 2H crystal structure and the 3R crystal structure in the crystal phase (2H:3R) obtained by the extended Rietveld analysis using the profile obtained from XRD is, from the viewpoint of the effects described above, more preferably 10:90 to 80:20, and still more preferably 40:60 to 80:20.

In addition, the 2H crystal structure obtained by the extended Rietveld analysis may also be composed of a crystal phase (first crystal phase) made up of crystallites having a predetermined crystallite size and a second crystal phase having a smaller crystallite size than the first crystal phase. The crystallite size of the first crystal phase of the 2H crystal structure is, for example, more than 20 nm and 150 nm or less, and may also be 50 nm or more and 150 nm or less, or 100 nm or more and 150 nm or less. However, it is more preferable that the first crystal phase does not exist in the crystal phase of the 2H crystal structure, or that its abundance ratio is low. In addition, the crystallite size of the second crystal phase of the 2H crystal structure is preferably 1 nm or more and 20 nm or less, and may also be 1 nm or more and 10 nm or less, or 5 nm or more and 15 nm or less.

Similarly to the above, the crystallite size of the first crystal phase of the 2H crystal structure, the crystallite size of the 3R crystal structure, and the crystallite size of the second crystal phase of the 2H crystal structure can each also be calculated using the peak half-width in the XRD diffraction profile, for example.

The abundance ratio of the first crystal phase of the 2H crystal structure, the 3R crystal structure, and the second crystal phase of the 2H crystal structure in the crystal phase (2H (first crystal phase):3R:2H (second crystal phase)) obtained by the extended Rietveld analysis using the profile obtained from XRD is preferably 30 to 0:10 to 70:80 to 15, and more preferably 25 to 0:20 to 60:75 to 20.

In the profile of the composite of the embodiment obtained from powder X-ray diffraction (XRD) using Cu-K$\alpha$ radiation as the X-ray source, it is preferable that the peak at around $2\theta = 39.5°$ and the peak at around $49.5°$ are derived from the 2H crystal structure, the peak at around $2\theta = 32.5°$, the peak at around $39.5°$, and the peak at around $49.5°$ are derived from the 3R crystal structure, and the half-widths of the peak at around $2\theta = 39.5°$ and the peak at around $49.5°$ are $1°$ or more. Further, the molybdenum disulfide may also include a crystal structure other than the 2H crystal structure and 3R crystal structure of molybdenum disulfide, such as a 1H crystal structure.

The presence of a metastable 3R crystal structure in the molybdenum disulfide can be distinguished by the fact that in a profile obtained from powder X-ray diffraction (XRD) using Cu-K$\alpha$ radiation as the X-ray source, the peak at around $2\theta = 39.5°$ and the peak at around $2\theta = 49.5°$ are each composed of a composite peak of the 2H crystal structure and the 3R crystal structure.

In practice, the abundance ratio of the 2H crystal structure is determined by a peak at around $2\theta = 39.5°$ and a broad peak at around $2\theta = 49.5°$ using the profile obtained from powder X-ray diffraction (XRD). In addition, the abundance ratio of the 3R crystal structure is determined by optimizing the difference between the peak at around $2\theta = 39.5°$ and the broad peak at around $49.5°$ with two peaks at around $2\theta = 32.5°$ and two peaks at around $39.5°$. That is, the peak at around $2\theta = 39.5°$ and the peak at around $49.5°$ are both composite waves derived from the 2H crystal structure and the 3R crystal structure, and, from these composite waves, the abundance ratio of the 2H crystal structure and the 3R crystal structure in molybdenum disulfide can be calculated.

In addition, the composite of the embodiment may include an amorphous phase. The abundance ratio of the amorphous phase in the composite of the embodiment is expressed as 100 (%) - (crystallinity (%)), and is preferably 5% or more, more preferably 15% or more, and still more preferably 20% or more.

In the radial distribution function obtained from the extended X-ray absorption fine structure (EXAFS) profile of the K-absorption edge of molybdenum of the composite of the embodiment, the ratio (I/II) between the intensity I of the peak attributable to Mo-S and the peak intensity II attributable to Mo-Mo is preferably more than 1.0, more preferably 1.1 or more, and particularly preferably 1.2 or more.

Regardless of whether the crystal structure of molybdenum disulfide is a 2H crystal structure or a 3R crystal structure, the Mo-S distance is almost the same because it is a covalent bond. Therefore, in the extended X-ray absorption fine structure (EXAFS) profile of the K-absorption edge of molybdenum, the intensity of the peak attributable to Mo-S is the same. Meanwhile, because the 2H crystal structure of molybdenum disulfide is hexagonal, the same hexagon is located 90° just below the hexagon of Mo atoms. Therefore, the Mo-Mo distance becomes shorter, and the peak intensity II attributable to Mo-Mo becomes stronger.

Conversely, because the 3R crystal structure of molybdenum disulfide is rhombohedral, the hexagon is not present 90° just below the hexagon, but is offset by half. Therefore, the Mo-Mo distance becomes longer, and the peak intensity II attributable to Mo-Mo becomes weaker.

In the pure 2H crystal structure of molybdenum disulfide, the ratio (I/II) is low, but as the 3R crystal structure is included, the ratio (I/II) becomes high.

According to the composite of the embodiment described above, excellent catalytic performance can be exhibited.

The composite of the embodiment can be used as a catalyst, and can be used as a hydrogen evolution catalyst. The composite of the embodiment can be favorably used as a hydrogen evolution catalyst in a hydrogen evolution reaction (HER) such as water electrolysis.

In addition, the composite of the embodiment can be favorably used as a constituent material of a catalytic ink capable of forming a catalyst layer.

In addition, the composite of the embodiment can be favorably used as an electrode material for use as a constituent material of an electrode catalyst layer.

<<Method for Producing Composite>>

[Calcination Step]

A method for producing a composite of an embodiment includes a calcination step of heating molybdenum trioxide in the presence of a sulfur source at a temperature of 400°C or less. It is preferable that the molybdenum trioxide includes a β-crystal structure.

According to another aspect, a method for producing a composite of an embodiment may include, for example, a calcination step of heating molybdenum trioxide particles, which are obtained in the molybdenum trioxide particle production step described later, in the presence of a sulfur source at a temperature of 400°C or less.

The method for producing a composite may include heating molybdenum trioxide particles including the β-crystal structure of molybdenum trioxide in the absence of a sulfur source at a temperature of 100 to 800°C, and then in the presence of a sulfur source at a temperature of 400°C or less.

The calcination temperature in the presence of a sulfur source in the calcination step is 400°C or less, preferably less than 350°C, more preferably 320°C or less, and still more preferably 310°C or less.

The calcination temperature may be, for example, 200°C or more and 400°C or less, 220°C or more and 350°C or less, or 220°C or more and less than 320°C, and is still more preferably 250°C or more and 310°C or less.

When the calcination temperature is as low as 400°C or less, the progress of the sulfurization reaction from molybdenum trioxide to molybdenum disulfide can be easily controlled, and a composite containing both molybdenum disulfide and molybdenum trioxide can be easily obtained.

The calcination time in the presence of a sulfur source needs to be a time that allows the sulfurization reaction to proceed moderately and allows both molybdenum disulfide and molybdenum trioxide to coexist, and may be 1 to 20 hours, 2 to 15 hours, or 3 to 10 hours.

The calcination temperatures and calcination times exemplified above may be freely combined. As the calcination conditions in the presence of a sulfur source in the calcination step, for example, conditions where a calcination temperature of 200°C or more and 400°C or less is held for 1 to 20 hours, conditions where a calcination temperature of 220°C or more and less than 350°C is held for 2 to 15 hours, conditions where a calcination temperature of 220°C or more and 320°C or less is held for 3 to 10 hours, conditions where a calcination temperature of 250°C or more and 310°C or less is held for 3 to 10 hours, and like can be exemplified.

The temperature rise rate to the calcination temperature is preferably 1°C/min or more and 50°C/min or less, and more preferably 2°C/min or more and 10°C/min or less.

As the average particle size of primary particles of the molybdenum trioxide, a size of 2 nm or more and 1,000 nm or less can be exemplified.

The average particle size of primary particles of the molybdenum trioxide particles may also be 5 nm or more and 2,000 nm or less.

The average particle size of primary particles of molybdenum trioxide particles refers to the average of the primary particle sizes of 50 randomly selected primary particles under the following conditions. Molybdenum trioxide particles are photographed using a scanning electron microscope (SEM) or a transmission electron microscope (TEM). With respect to a smallest-unit particle (i.e., a primary particle) constituting the aggregate on the two-dimensional image, its major axis (Feret diameter of the longest part observed) and minor axis (short Feret diameter perpendicular to the Feret diameter of the longest part) are measured, and their average value is defined as the primary particle size.

In the method for producing a composite, the average particle size of primary particles of the molybdenum trioxide particles is preferably 1 μm or less. From the viewpoint of reactivity with sulfur, the average particle size is more preferably 600 nm or less, still more preferably 400 nm or less, and particularly preferably 200 nm or less. The average particle size of primary particles of the molybdenum trioxide particles may also be 2 nm or more, 5 nm or more, or 10 nm or more.

Molybdenum trioxide particles used for production of the composite are preferably composed of a collection of primary particles including the β-crystal structure of molybdenum trioxide. The above molybdenum trioxide particles have better reactivity with sulfur compared to conventional molybdenum trioxide particles composed only of α-crystals as the crystal structure, and also include the β-crystal structure of molybdenum trioxide. Therefore, in the reaction with a sulfur source, the conversion rate $R_C$ into $MoS_2$ can be increased.

The β-crystal structure of molybdenum trioxide can be confirmed by the presence of a peak attributed to the (011) plane of the β-crystal of $MoO_3$ (2θ: around 23.01°, No. 86426 (Inorganic Crystal Structure Database, ICSD)) in a profile obtained from powder X-ray diffraction (XRD) using Cu-Kα radiation as the X-ray source. The α-crystal structure of molybdenum trioxide can be confirmed by the presence of a peak on the (021) plane of the α-crystal of $MoO_3$ (2θ: around 27.32°_No. 166363 (Inorganic Crystal Structure Database (ICSD))).

In the profile of the molybdenum trioxide particles obtained from powder X-ray diffraction (XRD) using Cu-Kα radiation as the X-ray source, it is preferable that the ratio (β(011)/α(021)) of the peak intensity attributed to the (011) plane of the β-crystal of $MoO_3$ to the peak intensity attributed to the (021) plane of the α-crystal of $MoO_3$ (2θ: around 27.32°_No. 166363 (Inorganic Crystal Structure Database (ICSD))) is 0.1 or more.

The peak intensity attributed to the (011) plane of the β-crystal of $MoO_3$ and the peak intensity attributed to the (021) plane of the $\alpha$-crystal of $MoO_3$ are obtained by reading the maximum intensity of each peak, and the ratio ($\beta$(011)/$\alpha$ (021)) is determined.

In the molybdenum trioxide particles, the ratio ($\beta$(011)/$\alpha$(021)) is preferably 0.1 to 10.0, more preferably 0.2 to 10.0, and particularly preferably 0.4 to 10.0.

The $\beta$-crystal structure of molybdenum trioxide can also be confirmed by the presence of peaks at wavenumbers of 773, 848 $cm^{-1}$ and 905 $cm^{-1}$ in the Raman spectrum obtained from Raman spectroscopy measurement. The $\alpha$-crystal structure of molybdenum trioxide can be confirmed by the presence of peaks at wavenumbers of 663, 816 $cm^{-1}$ and 991 $cm^{-1}$.

As sulfur sources, for example, sulfur, hydrogen sulfide, and the like can be mentioned. They may be used alone, or it is also possible to use a combination of two or more kinds.

In the method for producing a composite, the charging ratio (molar ratio) of the S amount of the sulfur source relative to the $MoO_3$ amount in the molybdenum trioxide particles may be within a range of sulfur (S)/molybdenum trioxide ($MoO_3$) = 2 to 30, within a range of 3 to 15, or within a range of 4 to 6.

In this charging amount of sulfur source, the larger the excess amount of the sulfur source is, the more the abundance of unreacted molybdenum oxides tends to be suppressed.

Meanwhile, the smaller the values of the calcination temperature and the calcination time are, the higher the abundance of unreacted molybdenum oxides tends to be.

In the method for producing a composite, the proportion of $MoO_3$ contained in the molybdenum trioxide particles measured by X-ray fluorescence (XRF) is preferably 99.5 mass% or more. As a result, the conversion rate $R_C$ into $MoS_2$ can be easily controlled, and a high-purity composite that is free from the risk of generating disulfides derived from impurities and has good storage stability can be obtained.

The specific surface area of the molybdenum trioxide particles measured by the BET method is preferably 10 $m^2/g$ to 100 $m^2/g$.

In the molybdenum trioxide particles, for the reason that the reactivity with sulfur improves, the specific surface area is preferably 10 $m^2/g$ or more, more preferably 20 $m^2/g$ or more, and still more preferably 30 $m^2/g$ or more. In the molybdenum trioxide particles, for the reason that the production is facilitated, the specific surface area is preferably 100 $m^2/g$ or less, 90 $m^2/g$ or less, or 80 $m^2/g$ or less.

In the radial distribution function obtained from the extended X-ray absorption fine structure (EXAFS) profile of the K-absorption edge of molybdenum of the molybdenum trioxide particles, the ratio ($I^O/II^O$) of the intensity I of the peak attributable to Mo-O to the peak intensity $II^O$ attributable to Mo-Mo is preferably more than 1.1.

The intensity $I^O$ of the peak attributable to Mo-O and the peak intensity $II^O$ attributable to Mo-Mo are obtained by reading the maximum intensity of each peak, and the ratio ($I^O/II^O$) is determined. The ratio ($I^O/II^O$) is considered to be an indication that the $\beta$-crystal structure of $MoO_3$ has been obtained in the molybdenum trioxide particles, and the higher the ratio ($I^O/II^O$), the better the reactivity with sulfur.

In the molybdenum trioxide particles, the ratio ($I^O/II^O$) is preferably 1.1 to 5.0, and may also be 1.2 to 4.0, or 1.2 to 3.0.

According to the method for producing a composite of the embodiment described above, the composite of the embodiment can be produced. In addition, the method for producing a composite of the embodiment has excellent advantages in that: 1) use of an organic solvent is not required during the reaction, 2) unlike general hydrothermal methods, the composite can be recovered without operations such as filtration, and 3) mass production is easy, for example.

(Method for Producing Molybdenum Trioxide Particles)

The method for producing a composite of the embodiment may further include a molybdenum trioxide production step of producing the molybdenum trioxide particles.

The molybdenum trioxide particles can be produced by a molybdenum trioxide production step that includes vaporizing a molybdenum oxide precursor compound to form a molybdenum trioxide vapor and cooling the molybdenum trioxide vapor.

The method for producing molybdenum trioxide particles includes calcining a raw material mixture containing a molybdenum oxide precursor compound and a metal compound other than the molybdenum oxide precursor compound, and vaporizing the molybdenum oxide precursor compound to form a molybdenum trioxide vapor, and the proportion of the metal compound relative to 100 mass% of the raw material mixture is preferably 70 mass% or less on an oxide basis.

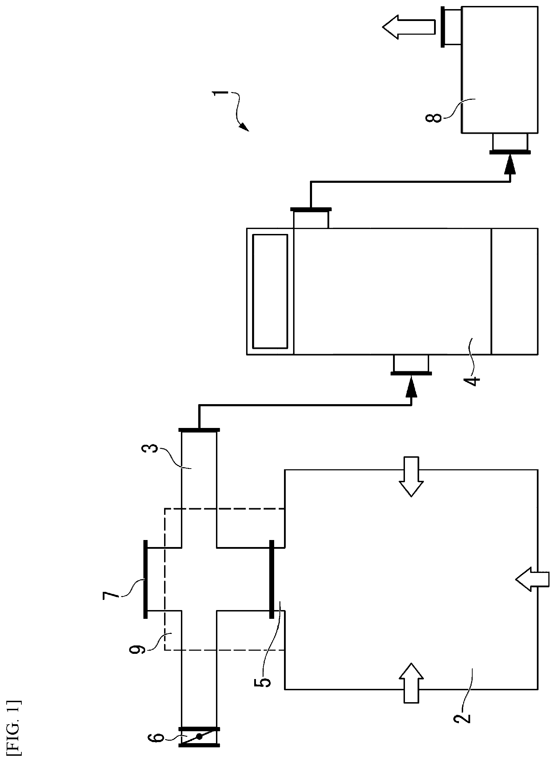

The method for producing molybdenum trioxide particles can be favorably performed using a production apparatus 1 shown in FIG. 1.

FIG. 1 is a schematic diagram showing an example of an apparatus used for producing molybdenum trioxide particles, a raw material for the composite according to this embodiment.

As shown in FIG. 1, the production apparatus 1 includes a calcination furnace 2 for calcining a molybdenum trioxide precursor compound or the above raw material mixture and vaporizing the molybdenum trioxide precursor compound, a cross-shaped cooling pipe 3 connected to the calcination furnace 2 for forming the molybdenum trioxide vapor vaporized by calcination into particles, and a recovering machine 4 that serves as a recovery means for recovering the molybdenum trioxide particles formed in the cooling pipe 3. At this time, the calcination furnace 2 and the cooling pipe 3 are connected via an outlet 5. In addition, the cooling pipe 3 has an opening adjustment damper 6 for an outside air inlet (not shown) disposed at the left end thereof, and also has an observation window 7 disposed at the upper end thereof. The recovering machine 4 has connected thereto an exhaust apparatus 8 that serves as a first blowing means. As the exhaust apparatus 8 exhausts air, the internal gas of the recovering machine 4 and the cooling pipe 3 is suctioned, and outside air is blown into the cooling pipe 3 through the opening adjustment damper 6 that the cooling pipe 3 has. That is, as the exhaust apparatus 8 performs a suction function, blowing into the cooling pipe 3 passively occurs. Incidentally, the production apparatus 1 may have an external cooling apparatus 9, which makes it possible to arbitrarily control the cooling conditions of the molybdenum trioxide vapor from the calcination furnace 2.

By opening the opening adjustment damper 6, air is taken in through the outside air inlet, and the molybdenum trioxide vapor vaporized in the calcination furnace 2 is cooled in the air atmosphere to form molybdenum trioxide particles. As a result, the ratio $(I^O/II^O)$ can be made higher than 1.1, and the $\beta$-crystal structure of $MoO_3$ is likely to be obtained in the molybdenum trioxide particles. The cooling of the molybdenum trioxide vapor in a nitrogen atmosphere with a low oxygen concentration, such as in the case of cooling a molybdenum trioxide vapor using liquid nitrogen, is likely to lead to an increased oxygen defect density and a reduced $(I^O/II^O)$ ratio.

The molybdenum oxide precursor compound is not particularly limited as long as it can be calcined to form a molybdenum trioxide vapor, and metal molybdenum, molybdenum trioxide, molybdenum dioxide, molybdenum sulfide, ammonium molybdate, phosphomolybdic acid ($H_3PMo_{12}O_{40}$), silicomolybdic acid ($H_4SiMo_{12}O_{40}$), aluminum molybdate, silicon molybdate, magnesium molybdate ($MgMo_nO_{3n+1}$ (n = 1 to 3)), sodium molybdate ($Na_2Mo_nO_{3n+1}$ (n = 1 to 3)), titanium molybdate, iron molybdate, potassium molybdate ($K_2Mo_nO_{3n+1}$ (n = 1 to 3)), zinc molybdate, boron molybdate, lithium molybdate ($Li_2Mo_nO_{3n+1}$ (n = 1 to 3)), cobalt molybdate, nickel molybdate, manganese molybdate, chromium molybdate, cesium molybdate, barium molybdate, strontium molybdate, yttrium molybdate, zirconium molybdate, copper molybdate, and the like can be mentioned. These molybdenum oxide precursor compounds may be used alone, or it is also possible to use a combination of two or more kinds. The form of the molybdenum oxide precursor compound is not particularly limited, and may be a powder form, such as molybdenum trioxide, or a liquid, such as an aqueous ammonium molybdate solution, for example. However, a powder form with good handleability and energy efficiency is preferable.

As the molybdenum trioxide precursor compound, it is particularly preferable to use commercially available $\alpha$-crystalline molybdenum trioxide. In addition, in the case where ammonium molybdate is used as the molybdenum oxide precursor compound, because calcination causes conversion into thermodynamically stable molybdenum trioxide, the vaporized molybdenum oxide precursor compound becomes the above molybdenum trioxide.

A molybdenum trioxide vapor can also be formed by calcining a raw material mixture containing a molybdenum oxide precursor compound and a metal compound other than the molybdenum oxide precursor compound.

Among them, for the reason that the purity, average primary particle size, and crystal structure of the resulting molybdenum trioxide powder can be easily controlled, it is preferable that the molybdenum oxide precursor compound contains molybdenum trioxide.

In some cases, the molybdenum oxide precursor compound and the metal compound other than the molybdenum oxide precursor compound generate an intermediate. Even in such a case, the intermediate is decomposed by calcination, and molybdenum trioxide can be vaporized in a thermodynamically stable form.

As metal compounds other than the molybdenum oxide precursor compound, among them, for preventing damage to the calcination furnace, it is preferable to use an aluminum compound. In order to improve the purity of the molybdenum trioxide particles, it is also possible not to use a metal compound other than the molybdenum oxide precursor compound.

Metal compounds other than the molybdenum oxide precursor compound are not particularly limited, and, for example, aluminum compounds, silicon compounds, titanium compounds, magnesium compounds, sodium compounds, potassium compounds, zirconium compounds, yttrium compounds, zinc compounds, copper compounds, iron compounds, and the like can be mentioned. Among them, as the metal compound, it is preferable to use the aluminum compound, silicon compound, titanium compound, or magnesium compound.

In some cases, the molybdenum oxide precursor compound and the metal compound other than the molybdenum oxide precursor compound generate an intermediate. Even in such a case, the intermediate is decomposed by calcination, and molybdenum trioxide can be vaporized in a thermodynamically stable form.

As a metal compound other than the molybdenum oxide precursor compound, for preventing damage to the calcination furnace, it is preferable to use an aluminum compound. In the above production method, in order to improve the purity of the molybdenum trioxide powder, it is also possible not to use a metal compound other than the molybdenum oxide precursor compound.

As aluminum compounds, aluminum chloride, aluminum sulfate, basic aluminum acetate, aluminum hydroxide, boehmite, pseudo-boehmite, transition aluminum oxides ($\gamma$-aluminum oxide, $\delta$-aluminum oxide, $\theta$-aluminum oxide, etc.), $\alpha$-aluminum oxide, a mixed aluminum oxide having two or more crystal phases, and the like can be mentioned.

When calcining a raw material mixture containing a molybdenum oxide precursor compound and a metal compound other than the molybdenum oxide precursor compound, the proportion of the molybdenum oxide precursor compound contained relative to 100 mass% of the raw material mixture is preferably 40 mass% or more and 100 mass% or less, and may also be 45 mass% or more and 100 mass% or less, or 50 mass% or more and 100 mass% or less.

The calcination temperature varies depending on the molybdenum oxide precursor compound and metal compound used, the desired molybdenum trioxide particles, and the like, but is usually preferably set to a temperature at which the intermediate can decompose. For example, in the case where a molybdenum compound is used as the molybdenum oxide precursor compound, and an aluminum compound is used as the metal compound, aluminum molybdate can be formed as an intermediate. Accordingly, the calcination temperature is preferably 500 to 1,500°C, more preferably 600 to 1,550°C, and still more preferably 700 to 1,600°C.

The calcination time is not particularly limited, but may be, for example, 1 minute to 30 hours, 10 minutes to 25 hours, or 100 minutes to 20 hours.

The temperature rise rate varies depending on the molybdenum oxide precursor compound used, the metal compound, the desired properties of molybdenum trioxide particles, and the like, but is, from the viewpoint of production efficiency, preferably 0.1°C/min to 100°C/min, more preferably 1°C/min to 50°C/min, and still more preferably 2°C/min to 10°C/min.

The internal pressure in the calcination furnace is not particularly limited and may be positive pressure or vacuum. However, from the viewpoint of favorably discharging the molybdenum oxide precursor compound from the calcination furnace to the cooling pipe, calcination is preferably performed under vacuum. Specifically, the degree of vacuum is preferably -5,000 Pa to -10 Pa, more preferably -2,000 Pa to -20 Pa, and still more preferably -1,000 Pa to -50 Pa. When the degree of vacuum is -5,000 Pa or more, high airtightness or mechanical strength of the calcination furnace is not excessively required, leading to the reduction of production cost; therefore, this is preferable. Meanwhile, when the degree of vacuum is -10 Pa or less, the molybdenum oxide precursor compound can be prevented from clogging the discharge port of the calcination furnace; therefore, this is preferable.

Incidentally, in the case where a gas is blown into the calcination furnace during calcination, the temperature of the blown gas is preferably 5 to 500°C, and more preferably 10 to 100°C.

In addition, the gas blowing rate is preferably 1 L/min or more and 500 L/min or less, more preferably 10 L/min or more and 200 L/min or less, relative to 100 L of the effective volume of the calcination furnace.

The temperature of the vaporized molybdenum trioxide vapor varies depending on the kind of molybdenum oxide precursor compound used, but is preferably 200 to 2,000°C, and more preferably 400 to 1,500°C. Incidentally, when the temperature of the vaporized molybdenum trioxide vapor is 2,000°C or less, the vapor usually tends to be easily formed into particles by blowing outside air (0 to 100°C) into the cooling pipe.

The discharge rate of the molybdenum trioxide vapor discharged from the calcination furnace can be controlled by the amount of the molybdenum oxide precursor compound used, the amount of the metal compound, the temperature of the calcination furnace, the blowing of a gas into the calcination furnace, and the diameter of the calcination furnace outlet. The discharge rate of the molybdenum trioxide vapor from the calcination furnace to the cooling pipe varies depending on the cooling capacity of the cooling pipe, but is preferably 0.001 g/min or more and 100 g/min or less, and more preferably 0.1 g/min or more and 50 g/min or less.

In addition, the content of molybdenum trioxide vapor in the gas discharged from the calcination furnace is preferably 0.01 mg/L or more and 1,000 mg/L or less, and more preferably 1 mg/L or more and 500 mg/L or less.

The molybdenum trioxide vapor is then cooled and formed into particles.

The cooling of the molybdenum trioxide vapor is performed by lowering the temperature of the cooling pipe. In this case, the cooling means may be cooling by blowing a gas into the cooling pipe as described above, cooling by the cooling mechanism that the cooling pipe has, or cooling by an external cooling apparatus, or the like.

The cooling of the molybdenum trioxide vapor is preferably performed in an air atmosphere. The molybdenum trioxide vapor is cooled in an air atmosphere and formed into molybdenum trioxide particles, whereby the ratio ($I^O/II^O$) can be made higher than 1.1, and the $\beta$-crystal structure of $MoO_3$ is likely to be obtained in the molybdenum trioxide particles.

The cooling temperature (the temperature of the cooling pipe) is not particularly limited, but is preferably -100 to 600°C, and more preferably -50 to 400°C.

The cooling rate of the molybdenum trioxide vapor is not particularly limited, but is preferably 100°C/s or more and 100,000°C/s or less, and more preferably 1,000°C/s or more and 50,000°C/s or less. Incidentally, as the cooling rate of the molybdenum trioxide vapor increases, the resulting molybdenum trioxide particles tend to have a smaller particle size and a larger specific surface area.

When the cooling means is cooling by blowing a gas into the cooling pipe, the temperature of the blown gas is preferably -100 to 300°C, and more preferably -50 to 100°C.

In addition, the gas blowing rate is preferably 0.1 m$^3$/min or more and 20 m$^3$/min or less, and more preferably 1

m$^3$/min or more and 10 m$^3$/min or less. When the gas blowing rate is 0.1 m$^3$/min or more, a high cooling rate can be achieved, and clogging of the cooling pipe can be prevented; therefore, this is preferable. Meanwhile, when the gas blowing rate is 20 m$^3$/min or less, an expensive first blowing means (an exhauster, etc.) is not required, and the production cost can be reduced; therefore, this is preferable.

The particles obtained by cooling the molybdenum trioxide vapor are transported to the recovering machine and recovered.

In the method for producing molybdenum trioxide particles, the particles obtained by cooling the molybdenum trioxide vapor may be calcined again at a temperature of 100 to 320°C.

That is, the molybdenum trioxide particles obtained by the method for producing molybdenum trioxide particles may be calcined again at a temperature of 100 to 320°C. The calcination temperature for re-calcination may 120 to 280°C, or 140 to 240°C. The calcination time for re-calcination may be, for example, 1 minute to 4 hours, 10 minutes to 5 hours, or 100 minutes to 6 hours. However, re-calcination results in partial disappearance of the β-crystal structure of molybdenum trioxide, and, as a result of calcination at a temperature of 350°C or more for 4 hours, the β-crystal structure in the molybdenum trioxide particles disappears, the ratio (β(011)/α(021)) becomes 0, and the reactivity with sulfur is lost.

By the method for producing molybdenum trioxide particles described above, molybdenum trioxide particles favorable for producing the above composite can be produced.

[Washing Step]

The method for producing a composite of the embodiment may include, after the calcination step, a washing step for removing the sulfur source. Through the washing step, excess of the sulfur source used in the calcination step can be removed. The washing step may be repeated two or more times as necessary.

The method for removing the sulfur source is not particularly limited, and a method in which a solvent capable of dissolving a sulfur source is brought into contact with the product obtained in the calcination step, thereby transferring the sulfur source to the solvent, can be mentioned. The solvent may be toluene, hexane, carbon disulfide, or the like, and excess of the sulfur source can be removed by washing with such a solvent.

For example, in the case where a simple substance sulfur is used as the sulfur source, by performing the washing step, the proportion of the content of sulfur as a simple substance in the elemental sulfur in the produced composite can be reduced.

<<Hydrogen Evolution Catalyst>>

The composite of the embodiment can be favorably used as a catalyst in the hydrogen evolution reaction (HER) (sometimes referred to as "hydrogen evolution catalyst" herein). In addition, the composite of the embodiment can also be used as a hydrogen evolution catalyst when used together with an electrically conductive material. That is, as a preferred hydrogen evolution catalyst, for example, one containing the composite of the embodiment can be mentioned, and the hydrogen evolution catalyst may further contain an electrically conductive material in addition to the composite of the embodiment. The hydrogen evolution catalyst containing the composite of the embodiment and an electrically conductive material has higher catalytic activity in the hydrogen evolution reaction (HER).

The electrically conductive material may be a known material.

As the electrically conductive material, for example, highly electrically conductive carbon, metals, and the like can be mentioned.

The hydrogen evolution catalyst may contain only one kind of the electrically conductive material, and it is also possible to contain two or more kinds.

As the electrically conductive material, for example, carbon black such as acetylene black, Cabot carbon black, Ketjen black and like, graphite, carbon fiber, metal powders, and the like can be mentioned. Ketjen black is excellent in that it has a high specific surface area and electrical conductivity, and can further also suppress the aggregation of molybdenum sulfide.

As electrically conductive material metals, for example, gold, silver, copper, aluminum, rhodium, molybdenum, tungsten, iron, nickel, cobalt, indium, and the like can be mentioned.

The hydrogen evolution catalyst may contain only one kind of the electrically conductive material metal, and it is also possible to contain two or more kinds.

As an electrically conductive material, for example, the hydrogen evolution catalyst may contain no metal and contain carbon, may contain no carbon and contain a metal, or may contain both a metal and carbon.

In the hydrogen evolution catalyst, the content of electrically conductive material is preferably 0.1 to 100 parts by mass, more preferably 0.5 to 50 parts by mass, relative to 100 parts by mass of the content of the composite of the embodiment.

In the hydrogen evolution catalyst, the proportion of the total content of the composite of the embodiment and the electrically conductive material relative to the total mass (100 mass%) of the hydrogen evolution catalyst is preferably 80 mass% or more, more preferably 90 mass% or more, and still more preferably 95 mass% or more, and, for example, may be 97 mass% or more, or 99 mass% or more. The proportion may also be 100 mass%. When the proportion is equal to or more than the above lower limit, the catalytic activity of the hydrogen evolution catalyst in the hydrogen evolution reaction (HER) further increases. The proportion needs to be 100 mass% or less.

<<Catalytic Ink>>

The hydrogen evolution catalyst is favorable as a component contained in a catalytic ink.

A catalytic ink of an embodiment contains the composite of the embodiment and a solvent.

The catalytic ink of the embodiment may contain the composite of the embodiment, a polymer electrolyte, and a solvent.

The catalytic ink of this embodiment may further contain an electrically conductive material. As the kind and content of the electrically conductive material, those exemplified above can be mentioned.

The catalytic ink can be applied, for example, to a working electrode substrate or the like to form a catalyst layer.

As polymer electrolytes, those generally used in the formation of a catalyst layer can be used. Specifically, perfluorocarbon polymers having a sulfonic acid group (e.g., Nafion®), hydrocarbon-based polymer compounds having a sulfonic acid group, polymer compounds doped with an inorganic acid such as phosphoric acid, organic/inorganic hybrid polymers partially substituted with a proton conductive functional group, proton conductors having a polymer matrix impregnated with a phosphoric acid solution or a sulfuric acid solution, and the like can be mentioned.

As solvents, those that can disperse the composite of the embodiment and can be applied to a working electrode substrate or the like to form a catalyst layer can be mentioned. As the solvent, it is preferable to contain an alcohol such as 1-propanol, 2-propanol, 1-butanol, 2-butanol, 1-pentanol, 2-pentanol, 1-hexanol, 2-hexanol, 1-heptanol, or 2-heptanol.

Examples

Hereinafter, the invention will be described in further detail with reference to examples, but the invention is not limited to the following examples.

[Synthesis Example 1]

(Production of Molybdenum Trioxide Particles)

A calcination furnace corresponding to a heat-resistant container, a cooling pipe equipped with an outside air supply port, and a dust collector for recovering molybdenum oxides were prepared. Molybdenum oxide production was performed using an RHK simulator (manufactured by Noritake Co., Ltd.) as the calcination furnace and a VF-5N dust collector (manufactured by Amano Corporation) as the dust collector.

1.5 kg of aluminum hydroxide (manufactured by Nippon Light Metal Co., Ltd.) and 1 kg of molybdenum trioxide (manufactured by Nippon Muki Co., Ltd.) were mixed and then charged into the sagger, and the calcination furnace, the cooling pipe, and the dust collector were connected, followed by calcination at a temperature of 1,100°C for 10 hours. During calcination, outside air was introduced from the sides and bottom of the calcination furnace (blowing rate: 150 L/min, outside air temperature: 25°C). Molybdenum trioxide evaporates in the furnace, is then cooled near the dust collector, and precipitates as particles. Therefore, molybdenum trioxide was recovered by the dust collector.

After calcination, 1.0 kg of a blue powder aluminum oxide in the sagger and 0.8 kg of molybdenum trioxide recovered in the dust collector were taken out.

The recovered molybdenum trioxide had a primary particle size of 1 $\mu$m or less. By fluorescent X-ray measurement, the purity of the molybdenum trioxide was found to be 99.8%.

[Example 1]

(Production of Composite Particles)

500 mg of the molybdenum trioxide particles obtained in the above Synthesis Example 1 and 556 mg of sulfur (Reagent S manufactured by Kanto Kagaku) were fed to a crucible and mixed to uniformity. The S amount of sulfur per mole of the $MoO_3$ amount in the molybdenum trioxide particles used was 5 mol. After mixing, the crucible was covered with a lid, fed to a nitrogen atmosphere furnace, and subjected to calcination. The calcination conditions were as follows: the temperature was raised from a room temperature of 25°C at a rate of 5°C/min, and when 300°C was reached, the temperature was held for 4 hours. During the calcination step, a nitrogen gas was blown at 0.2 ml/min. Subsequently, the temperature inside the furnace was allowed to drop by natural cooling to obtain a product. The washing operation in which the obtained product was ultrasonically washed in toluene, and then toluene was exchanged, was repeated three times, followed by vacuum drying, thereby giving composite particles of Example 1.

[Examples 2 to 5]

Composite particles of Examples 2 to 5 were obtained in the same manner as in the above Example 1, except that the amount of sulfur in the raw material used and the calcination temperature in Example 1 were changed as in the conditions described in Table 1.

[Reference Example 1]

Composite particles of Comparative Example 1 were obtained in the same manner as in the above Example 1, except that the calcination temperature in Example 1 was changed as in the conditions described in Table 1.

[Reference Example 2]

The molybdenum trioxide particles obtained in the above Synthesis Example 1 were used as molybdenum trioxide particles of Reference Example 2.

[Comparative Example 1]

Commercially available molybdenum trioxide particles (manufactured by Nippon Muki Co., Ltd.) were used as molybdenum trioxide particles of Comparative Example 1.

[Comparative Example 2]

Commercially available molybdenum disulfide particles (manufactured by Kanto Kagaku) were used as molybdenum disulfide particles of Comparative Example 2.

The particles of Examples 1 to 5, Reference Examples 1 and 2, and Comparative Examples 1 and 2 were used as samples and subjected to the following evaluations.

<<Evaluation>>

[XRF Analysis]

Using a fluorescent X-ray analyzer Primus IV (manufactured by Rigaku Corporation), about 20 to 30 mg of a sample was placed on filter paper, covered with a PP film, and subjected to composition analysis. From the sulfur amount determined from the XRF analysis results, the molybdenum disulfide-equivalent amount (mass%) relative to 100 mass% of the sample particles was determined. From the molybdenum amount minus molybdenum for the molybdenum disulfide-equivalent amount, the molybdenum trioxide-equivalent amount (mass%) relative to 100 mass% of the sample particles was determined.

[XRD Crystal Structure Measurement]

A sample was loaded into a measurement sample holder having a depth of 0.5 mm, and set in a wide-angle X-ray diffraction (XRD) apparatus (Ultima IV manufactured by Rigaku Corporation), followed by measurement under the following conditions: Cu/K$\alpha$ radiation, 40 kV/40 mA, scanning speed: $2\theta = 2°$/min, scanning range: $2\theta = 10°$ to $70°$.

[Measurement of Crystallite Size]

Measurement was performed using SmartLab 9 kW (manufactured by Rigaku Corporation) as the X-ray diffraction apparatus, a scintillation counter detector as the detector, and PDXL2 as the analysis software. The measurement method was the $2\theta/\theta$ method. The average crystallite size of molybdenum disulfide was calculated from the half-width of the peak appearing at $2\theta = 14.4°\pm0.5°$ using the Scherrer equation. The average crystallite size of molybdenum trioxide was calculated from the half-width of the peak appearing at $2\theta = 12.7°\pm0.5°$ using the Scherrer equation. Incidentally, the measurement conditions were as follows: scanning speed ($2\theta$): $2.0°$/min, scanning range ($2\theta$): 10 to $70°$, step ($2\theta$): $0.02°$, apparatus standard width: none.

[Conversion Rate $R_C$]

The conversion rate $R_C$ of a sample into $MoS_2$ was determined by the RIR (reference intensity ratio) method from the profile data obtained by subjecting the sample to X-ray diffraction (XRD) measurement. The conversion rate $R_C$ into $MoS_2$ was determined from the following formula (1) using the RIR value $K_A$ of molybdenum disulfide ($MoS_2$) and the integrated intensity $I_A$ of the peak at around $2\theta = 14.4° \pm 0.5°$ attributed to the (002) or (003) plane of molybdenum disulfide ($MoS_2$), as well as the RIR value $K_B$ of each molybdenum oxide (the raw material $MoO_3$, the reaction intermediates $Mo_9O_{25}$, $Mo_4O_{11}$, and $MoO_2$, etc.) and the integrated intensity $I_B$ of the strongest line peak of each molybdenum oxide (the raw material $MoO_3$, the reaction intermediates $Mo_9O_{25}$, $Mo_4O_{11}$, and $MoO_2$, etc.).

$$R_C\ (\%) = (I_A/K_A)/((I_A/K_A) + \Sigma(I_B/K_B)) \times 100 \ ... \ (1)$$

Here, as the RIR values, values described in the Inorganic Crystal Structure Database (ICSD) (by Japan Association for International Chemical Information) were each used, and, for the analysis, integrated powder X-ray analysis software (e.g., PDXL2 manufactured by Rigaku Corporation) was used.

[Measurement of BET Specific Surface Area]

Measurement was performed using a specific surface area meter (BELSORP-mini manufactured by MicrotracBEL Corp.), and the surface area per gram of sample measured from the amount of nitrogen gas adsorption using the BET method was calculated as the specific surface area.

[Measurement of Median Diameter $D_{50}$]

0.1 g of a sample powder was added to 20 cc of acetone and ultrasonically treated in an ice bath for 4 hours. Further, the concentration was then suitably adjusted with acetone to a range measurable by a dynamic light scattering particle size distribution measuring apparatus (Nanotrac WaveII manufactured by MicrotracBEL Corp.), thereby giving a measurement sample. Using this measurement sample, the particle size distribution in the particle size range of 0.0001 $\mu$m to 10 $\mu$m was measured using a dynamic light scattering particle size distribution measuring apparatus to calculate the median diameter $D_{50}$, which is the particle diameter at a volume cumulative percentage of 50%. Incidentally, for those with a median diameter $D_{50}$ of more than 10 $\mu$m (Comparative Example 2), a solution was prepared in the same manner, and the particle size distribution in the particle size range of 0.015 $\mu$m to 500 $\mu$m was measured using a laser diffraction particle size distribution measuring apparatus (SALD-7000 manufactured by Shimadzu Corporation) to calculate the median diameter $D_{50}$.
The results of the above measurements are shown in Table 1.

[Table 1]

| | | Production | | | | | Evaluation | | | | | | | | | | |
|---|---|---|---|---|---|---|---|---|---|---|---|---|---|---|---|---|---|
| | | Synthesis Example 1 MoO$_3$ | S | S/MoO$_3$ | Calcination Conditions | | MoO$_3$ Content B (XRF) | MoS$_2$ Content A (XRF) | A/B | Rc | BET Surface Specific Area | MoS$_2$ Average Crystallite Size 2θ = 14.4° ± 0.5° | MoO$_3$ Average Crystallite Size 2θ = 12.7° ± 0.5 | D$_{50}$ | Catalytic Performance | |
| | | | | | Temperature | Holding Time | | | | | | | | | Overvoltage 10 mAcm$^{-2}$ | Current Density -0.3V |
| | | g | g | Molar ratio | °C | h | mass% | mass% | | % | m$^2$/g | nm | nm | nm | mV | mAcm 2 |
| Example 1 | MoO$_3$/MoS$_2$ | 0.5 | 0.556 | 5 | 300 | 4 | 69.7 | 30.3 | 0.4 | 28.1 | 20.8 | 4 | 12 | 410.2 | 167 | 117.8 |
| Example 2 | MoO$_3$/MoS$_2$ | 0.5 | 0.556 | 5 | 320 | 4 | 61.2 | 38.8 | 0.6 | 36.3 | 38.3 | 4 | 13 | 426.7 | 150 | 96.8 |
| Example 3 | MoO$_3$/MoS$_2$ | 0.5 | 1.002 | 9 | 300 | 4 | 14.7 | 85.3 | 5.8 | 83.7 | 83.9 | 4 | 4 | 395.2 | 150 | 94.0 |
| Example 4 | MoO$_3$/MoS$_2$ | 0.5 | 1.002 | 9 | 320 | 4 | 11.4 | 88.6 | 7.6 | 87.5 | 22.8 | 4 | 12 | 441.5 | 189 | 69.5 |
| Example 5 | MoO$_3$/MoS$_2$ | 0.5 | 1.112 | 10 | 300 | 4 | 10.8 | 89.2 | 8.3 | 88.1 | 15.4 | 4 | 4 | 556.7 | 180 | 91.3 |
| Reference Example 1 | MoO$_3$/MoS$_2$ | 0.5 | 0.556 | 5 | 500 | 4 | 1.2 | 98.8 | 82.3 | 98.7 | 53.7 | 5 | - | 250 | 194 | 51.3 |
| Reference Example 2 (Synthesis Example 1) | MoO$_3$ | - | - | - | - | - | - | - | - | - | 130.9 | - | 13 | 266.3 | Immeasurable | 0.6 |
| Comparative Example 1 | Commercially available MoO$_3$ | - | - | - | - | - | - | - | - | - | 0.9 | - | 41 | 2859 | Immeasurable | 0.9 |
| Comparative Example 2 | Commercially available MoS$_2$ | - | - | - | - | - | - | - | - | - | 2.8 | 45 | - | 13340 | Immeasurable | 1.7 |

The particles of Examples 1 to 5, Reference Examples 1 and 2, and Comparative Examples 1 and 2 had the $MoO_3$ content, $MoS_2$ content, conversion rate $R_C$, BET specific surface area, $MoS_2$ average crystallite size, $MoO_3$ average crystallite size, and $D_{50}$ values shown in Table 1.

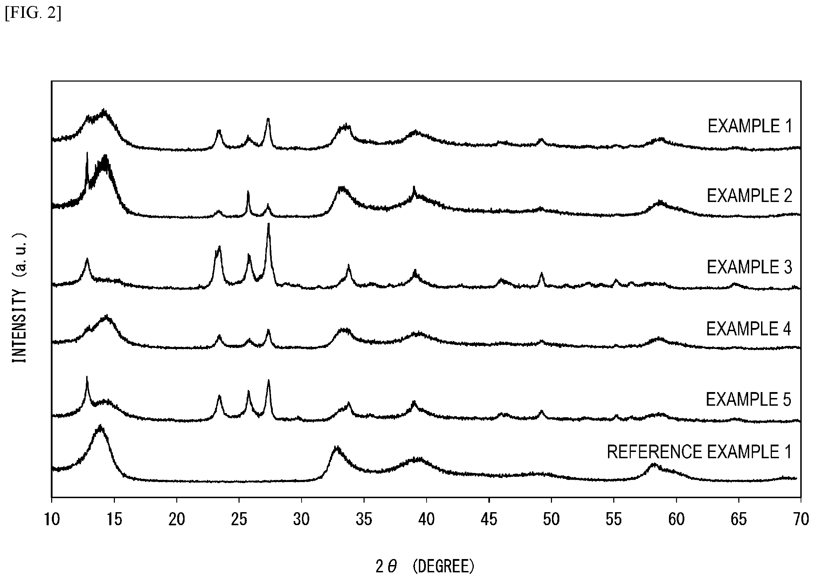

The results of the XRD analysis are shown in FIG. 2. The XRD profiles of the composite particles of Examples 1 to 5 included both a peak attributed to $MoS_2$ and a peak attributed to $MoO_3$. In addition, from the XRD profiles of the particles of Examples 1 to 5 and Reference Example 1, a peak at around $2\theta = 39.5°$ and a peak at around $49.5°$ derived from the 2H crystal structure of $MoS_2$ and a peak at around $2\theta = 32.5°$, a peak at around $39.5°$, and a peak at around $49.5°$ derived from the 3R crystal structure of $MoS_2$ were confirmed. It was confirmed that the particles of Examples 1 to 5 and Reference Example 1 included the 2H crystal structure and the 3R crystal structure of $MoS_2$.

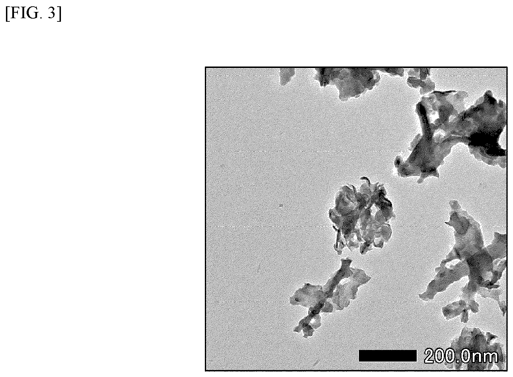

FIG. 3 shows an observation image of the composite particles of Example 1 obtained with a transmission electron microscope (TEM, JEM-1400 manufactured by JEOL Ltd.).

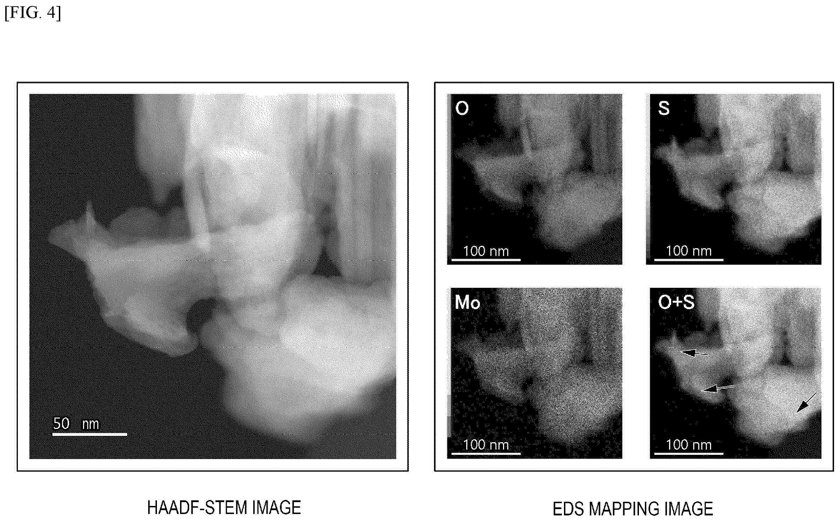

FIG. 4 shows an HAADF-STEM image (transmission electron image, JEM-ARM300F manufactured by JEOL Ltd.) of the composite particles of Example 1, and the results of element mapping by energy-dispersive X-ray spectroscopy (EDS).

From the results of element mapping, a region with a low abundance of elemental O and a high abundance of elemental S was present on the surface of the composite particles and also near the surface (see the arrow in FIG. 3). That is, a region closer to the surface of the composite particles had a higher content of $MoS_2$ than $MoO_3$, and $MoS_2$ was localized in the surface of the composite particles. This suggested that the conversion of particulate $MoO_3$ of Synthesis Example 1, the raw material, into $MoS_2$ occurred in the course of calcination, starting from the surface layer that was in contact with the sulfur source.

(Production of Catalytic Ink)

Inks were produced using the particles of Examples 1 to 5, Reference Examples 1 and 2, and Comparative Examples 1 and 2 as raw materials, and the catalytic performance in the hydrogen evolution reaction (HER) was evaluated by the following method.

4 mg of the particles obtained above (any of the particles of Examples 1 to 5, Reference Examples 1 and 2, and Comparative Examples 1 and 2), 2 mg of carbon black (manufactured by Lion Specialty Chemicals Co., Ltd., Ketjen Black, product number: EC300J, median diameter $D_{50}$: 40 nm), 40 $\mu$L of a 5% Nafion dispersion (FUJIFILM Wako Pure Chemical Corporation, Nafion dispersion solution), and 1 mL of ethanol were mixed, and the particles were dispersed by a ultrasonic treatment for 1 hour to produce an ink (dispersion). 20 $\mu$L of the obtained ink was applied to the surface of an electrode, and, after the surface liquid was dried naturally, the electrode was transferred to a vacuum dryer and dried at 60°C for 6 hours or more to obtain a test electrode. The hydrogen evolution reaction (HER) activity of the obtained test electrode was evaluated in a three-electrode mode. The evaluation conditions were as follows: LSV method, scanning voltage range: -0.3 V to 0 V, scanning speed: 5 mV/S.

The results of the catalytic performance evaluation are shown in Table 1.

Compared to the inks containing the particles of Reference Examples 1 and 2 or Comparative Examples 1 and 2, the inks containing the composite particles of Examples 1 to 5 had a lower overvoltage value at a current density of 10 mA $cm^{-2}$ (Reference Example 2 and Comparative Examples 1 and 2 were immeasurable) and a higher current density value at -0.3 V.

These results show that the composites of Examples 1 to 5 were capable of exhibiting excellent hydrogen evolution catalytic activity.

Each configuration and combinations thereof in each embodiment are merely examples, and, without departing from the spirit of the invention, additions, omissions, substitutions, and other modifications can be made to the configurations. In addition, the invention is not limited by the embodiments, but is limited only by the scope of the claims.

REFERENCE SIGNS LIST

1: Production apparatus
2: Calcination furnace
3: Cooling pipe
4: Recovering machine
5: Outlet
6: Opening adjustment damper
7: Observation window
8: Exhaust apparatus

9: External cooling apparatus

**Claims**

1.  A composite comprising molybdenum disulfide and molybdenum trioxide, wherein

    the molybdenum disulfide includes a 3R crystal structure, and
    the percentage content of a molybdenum trioxide-equivalent value (B) calculated from the molybdenum content determined by XRF analysis of the composite relative to the total mass of the composite is 5 to 90 mass%.

2.  The composite according to claim 1, wherein the molybdenum disulfide has an average crystallite size of 50 nm or less as determined from a peak at $2\theta = 14.4° \pm 0.5°$ obtained by X-ray diffraction measurement.

3.  The composite according to claim 1 or 2, wherein the molybdenum trioxide has an average crystallite size of 50 nm or less as determined from a peak at $2\theta = 12.7° \pm 0.5$ obtained by X-ray diffraction measurement.

4.  The composite according to claim 1 or 2, wherein the composite has a median diameter $D_{50}$ of 1,000 nm or less as determined by a dynamic light scattering method.

5.  The composite according to claim 1 or 2, wherein the composite has a specific surface area of 5 $m^2/g$ or more and 200 $m^2/g$ or less as measured by the BET method.

6.  The composite according to claim 1 or 2, wherein the ratio (A/B) of a molybdenum disulfide-equivalent value (A) calculated from the sulfur content determined by XRF analysis of the composite relative to the molybdenum trioxide-equivalent value (B) calculated from the molybdenum content determined by XRF analysis of the composite is 0.1 to 50 on a mass basis.

7.  The composite according to claim 1 or 2, wherein the percentage content of a molybdenum disulfide-equivalent value (A) calculated from the sulfur content determined by XRF analysis of the composite relative to the total mass of the composite is 10 to 95 mass%.

8.  The composite according to claim 1 or 2, wherein the proportion of the content of sulfur as a simple substance relative to the total content of elemental sulfur in the composite is 10% or less on a molar basis.

9.  The composite according to claim 1 or 2, being for use as a hydrogen evolution catalyst.

10. A catalytic ink comprising the composite according to claim 1 or 2 and a solvent.

11. A method for producing a composite, being for producing the composite according to claim 1 and comprising a calcination step of heating molybdenum trioxide in the presence of a sulfur source at a temperature of 400°C or less.

12. The method for producing a composite according to claim 11, comprising, after the calcination step, a washing step for removing the sulfur source.

13. The method for producing a composite according to claim 11, wherein the molybdenum trioxide has a specific surface area of 10 $m^2/g$ or more and 100 $m^2/g$ or less as measured by the BET method.

[FIG. 1]

[FIG. 2]

EP 4 588 561 A1

[FIG. 3]

[FIG. 4]

EDS MAPPING IMAGE

HAADF-STEM IMAGE

## INTERNATIONAL SEARCH REPORT

| | International application No. |
|---|---|
| | **PCT/JP2023/033665** |

**A.  CLASSIFICATION OF SUBJECT MATTER**

***B01J 27/051***(2006.01)i; ***B01J 37/20***(2006.01)i; ***C01G 39/02***(2006.01)i; ***C01G 39/06***(2006.01)i; ***C25B 1/04***(2021.01)i; ***C25B 11/091***(2021.01)i

FI:   B01J27/051 M; B01J37/20; C01G39/02; C01G39/06; C25B1/04; C25B11/091

According to International Patent Classification (IPC) or to both national classification and IPC

**B.  FIELDS SEARCHED**

Minimum documentation searched (classification system followed by classification symbols)

B01J21/00-38/74; C01G39/02; C01G39/06; C25B1/04; C25B11/091

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus (STN); JSTPlus/JST7580/JSTChina (JDreamIII)

**C.  DOCUMENTS CONSIDERED TO BE RELEVANT**

| Category* | Citation of document, with indication, where appropriate, of the relevant passages | Relevant to claim No. |
|---|---|---|
| X | WO 2021/060377 A1 (DIC CORP.) 01 April 2021 (2021-04-01) comparative example 4 | 1-5, 10-11, 13 |
| A | | 6-9, 12 |
| X | WO 2021/060375 A1 (DIC CORP.) 01 April 2021 (2021-04-01) comparative examples 3, 4 | 1-7, 11, 13 |
| A | | 8-10, 12 |
| A | WO 2019/181723 A1 (DIC CORP.) 26 September 2019 (2019-09-26) examples 1-8, comparative example 1 | 1-13 |
| A | WO 2022/172826 A1 (DIC CORP.) 18 August 2022 (2022-08-18) examples 1-15 | 1-13 |
| A | WO 2022/172824 A1 (DIC CORP.) 18 August 2022 (2022-08-18) examples 1-3 | 1-13 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 November 2023** | **12 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2023/033665**

| | C. | DOCUMENTS CONSIDERED TO BE RELEVANT | |
|---|---|---|---|

| Category* | Citation of document, with indication, where appropriate, of the relevant passages | Relevant to claim No. |
|---|---|---|
| A | CN 114560502 A (SOUTHERY SCIENCE AND TECHNOLOGY CO., LTD.) 31 May 2022 (2022-05-31)<br>example 1 | 1-13 |
| A | JP 2011-143389 A (JX NIPPON OIL & ENERGY CORP.) 28 July 2011 (2011-07-28)<br>paragraphs [0099], [0100] | 1-13 |

Form PCT/ISA/210 (second sheet) (January 2015)

## INTERNATIONAL SEARCH REPORT
### Information on patent family members

International application No.

**PCT/JP2023/033665**

| Patent document cited in search report | | | Publication date (day/month/year) | Patent family member(s) | | | Publication date (day/month/year) |
|---|---|---|---|---|---|---|---|
| WO | 2021/060377 | A1 | 01 April 2021 | US | 2022/0348476 | A1 | |
| | | | | comparative example 4 | | | |
| | | | | EP | 4036062 | A1 | |
| | | | | CN | 114423714 | A | |
| | | | | KR | 10-2022-0070208 | A | |
| WO | 2021/060375 | A1 | 01 April 2021 | US | 2022/0340443 | A1 | |
| | | | | comparative examples 3, 4 | | | |
| | | | | EP | 4036061 | A1 | |
| | | | | CN | 114430728 | A | |
| | | | | KR | 10-2022-0070436 | A | |
| WO | 2019/181723 | A1 | 26 September 2019 | US | 2021/0053037 | A1 | |
| | | | | examples 1-8, comparative example 1 | | | |
| | | | | EP | 3770120 | A1 | |
| | | | | CN | 111886203 | A | |
| | | | | KR | 10-2020-0130807 | A | |
| WO | 2022/172826 | A1 | 18 August 2022 | TW | 202241585 | A | |
| WO | 2022/172824 | A1 | 18 August 2022 | (Family: none) | | | |
| CN | 114560502 | A | 31 May 2022 | (Family: none) | | | |
| JP | 2011-143389 | A | 28 July 2011 | US | 2012/0298557 | A1 | |
| | | | | paragraphs [0104], [0105] | | | |
| | | | | WO | 2011/086750 | A1 | |
| | | | | EP | 2527034 | A1 | |
| | | | | CN | 102740967 | A | |

Form PCT/ISA/210 (patent family annex) (January 2015)

**EP 4 588 561 A1**

**Patent documents cited in the description**

- JP 2022146943 A
- JP 2004277199 A
- JP 2004512250 A